# EUROPÄISCHE PATENTSCHRIFT

(11) **EP 0 842 791 B1**
(45) Veröffentlichungstag und Bekanntmachung des Hinweises auf die Patenterteilung: **11.02.2004**
(21) Anmeldenummer: 97119492.3
(22) Anmeldetag: 07.11.1997
(51) Int. Cl.: B42D 15/10, G06K 19/14

(54) **Vorrichtung zur Herstellung einer bündigen Prägestruktur auf Datenträgern**
Manufacturing device for flush embossing on data carriers
Dispositif pour la fabrication d'une structure embossée affleurant sur des supports de données

(30) Priorität: 14.11.1996 DE 19647153
(43) Veröffentlichungstag der Anmeldung: 20.05.1998
(73) Patentinhaber: Giesecke & Devrient GmbH, 81677 München (DE)
(72) Erfinder: Welling, Ando, Dr., 84424 Isen (DE); Neumann, Eugen, 81243 München (DE); Zapf, Rudolf, 81477 München (DE); Hohmann, Arno, 81369 München (DE); Usner, Jürgen, 81375 München (DE)

(56) Entgegenhaltungen:
- DE-U- 29 621 588
- FR-A- 2 302 565

## Beschreibung

Die Erfindung betrifft eine Vorrichtung zur Herstellung eines Datenträgers gemäß dem Oberbegriff von Anspruch 1.

Um Fälschungen oder Manipulationen an Datenträgern zu erschweren bzw. zu verhindern, ist es üblich, auf diesen Sicherheitsmerkmale anzubringen. Ein derartiges Sicherheitsmerkmal ist beispielsweise eine Oberflächenstruktur in Form einer Linsenstruktur, durch die unter verschiedenen Blickwinkeln unterschiedliche Bilder, sogenannte "Kippbilder" sichtbar sind. Derartige Sicherheitsmerkmale sind schwer bzw. überhaupt nicht zu kopieren, so daß Fälschungen oder manipulierte Karten sofort und ohne großen Aufwand erkennbar sind.

Insbesondere Datenträger mit mehrschichtigem Aufbau, wie beispielsweise Chipkarten, werden mittels einer Kaschierplatten-Technik hergestellt. Ein derartiges Verfahren ist beispielsweise aus der EP 0 219 012 bekannt. Zur Herstellung von Karten mit Prägestruktur, wie Kippbildern, ist es aus der EP 0 219 012 bekannt, die einzelnen Kartenschichten zwischen zwei erwärmte Kaschierplatten zu legen und unter Druck zu einer Einheit zu laminieren. Gleichzeitig mit dem Kaschiervorgang kann auf den herzustellenden mehrschichtigen Datenträger eine Oberflächenstruktur, wie beispielsweise ein Linsenraster, mittels einer thermostabilen Prägematrize, die zwischen der transparenten Deckschicht des Datenträgers und der Kaschierplatte eingelegt wird, ausgebildet werden. Ferner ist es bekannt, die einzuprägende Oberflächenstruktur in die Kaschierplatte einzugravieren.

Aus der WO 96/15912 ist es bekannt, Datenträger mit bündig mit der Oberfläche abschließenden Oberflächenstrukturen herzustellen. Dies kann jedoch vorwiegend nur an Einzelkarten durchgeführt werden.

Der Erfindung liegt daher die Aufgabe zugrunde, eine Vorrichtung vorzuschlagen, mit der Datenträger mit bündig abschließender Oberflächenstruktur in Kaschierplattentechnik hergestellt werden können.

Diese Aufgabe wird von einer Vorrichtung der o.g. Art mit den in Anspruch 1 gekennzeichneten Merkmalen gelöst. Weiterbildungen können den abhängigen Ansprüchen entnommen werden.

Die Erfindung beruht auf dem Grundgedanken, daß die Prägestruktur erhaben auf der Kaschierplatte ausgebildet ist, so daß die auf dem Datenträger erzeugte bzw. zu erzeugende Oberflächenstruktur mit dessen Oberfläche zumindest bündig abschließt. Somit ragt die auf dem Datenträger zu erzeugende Oberflächenstruktur nicht über das umgebende Oberflächenniveau hinaus. Die auf dem Datenträger zu erzeugende Oberflächenstruktur schließt bevorzugt bündig mit der Datenträgeroberfläche ab oder hat ihr höchstes Niveau unterhalb der Datenträgeroberfläche. Die Datenträger sind gut stapelbar und weisen eine verschleißarme Oberfläche auf.

Weitere Merkmale, Vorteile und bevorzugte Weiterbildungen ergeben sich aus der nachfolgenden Beschreibung bevorzugter Ausführungsbeispiele unter Bezugnahme auf die beigefügten Zeichnungen.

Es zeigen:
- Fig. 1: in einer Schnittansicht eine Vorrichtung mit Kaschierplatten zur Herstellung von Datenträgern,
- Fig. 2: in einer Schnittansicht eine erste bevorzugte Ausführungsform einer Kaschierplatte,
- Fig. 3: in einer Schnittansicht eine zweite bevorzugte Ausführungsform einer Kaschierplatte,
- Fig. 4: eine dritte bevorzugte Ausführungsform einer Kaschierplatte,
- Fig. 5: eine vierte bevorzugte Ausführungsform einer Kaschierplatte, und
- Fig. 6: eine Seitenansicht eines Werkzeugs zur Herstellung einer Prägestruktur.

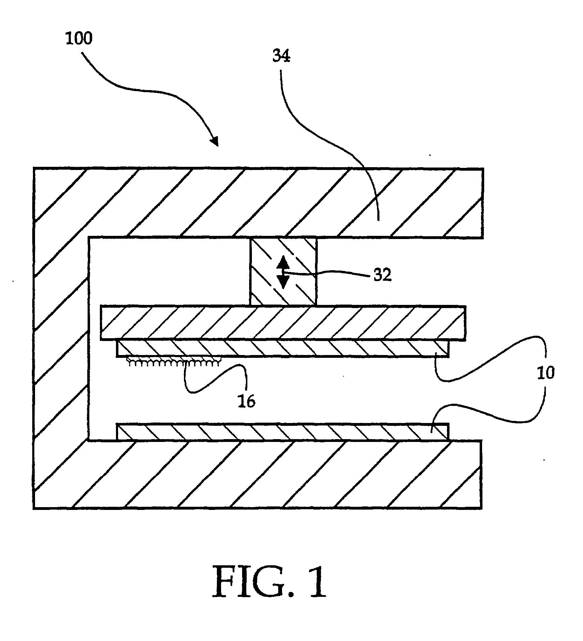

Figur 1 zeigt eine Vorrichtung 100 zur Herstellung von Datenträgern. Diese Vorrichtung hat einen Rahmen 34 und Kaschierplatten 10. Eine der Kaschierplatten 10 ist dabei in Pfeilrichtung 32 hin- und herbeweglich, so daß Datenträgerschichten, welche zwischen den Kaschierplatten angeordnet sind, zu einem Datenträger laminiert werden können.

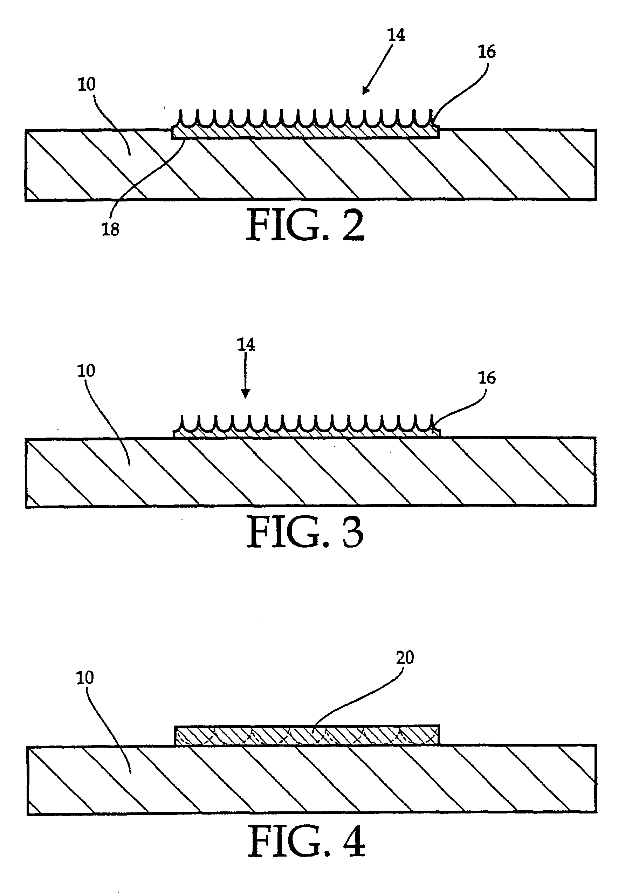

Eine Schnittansicht einer ersten bevorzugten Ausführungsform einer Kaschierplatte 10 zeigt Figur 2. Die Kaschierplatte 10 weist eine Ausnehmung 18 an einer vorbestimmten Stelle auf. In diese Ausnehmung ist ein Prägeelement 16 eingesetzt und fest mit der Kaschierplatte 10 verbunden. Das Prägeelement 16 weist eine zuvor ausgebildete Prägestruktur 14 auf.

Wie aus Fig. 2 ersichtlich, ist die Prägestruktur 14 derart angeordnet, daß sie erhaben auf der Kaschierplatte 10 ausgebildet ist, d. h. sie steht über die Oberfläche der Kaschierplatte 10 hervor. Beim Kaschieren eines oder mehrerer Datenträger mit einer derartigen Kaschierplatte 10 entsteht somit in dem Datenträger eine Oberflächenstruktur gemäß der Prägestruktur 14 derart, daß die Oberflächenstruktur bündig mit der Oberfläche des Datenträgers abschließt.

Fig. 3 zeigt in einer Schnittansicht eine zweite bevorzugte Ausführungsform einer Kaschierplatte 10. Wie bereits in Fig. 2 wird ein Prägeelement 16 mit darauf ausgebildeter Prägestruktur 14 auf der Kaschierplatte 10 befestigt. Im Unterschied zum Ausführungsbeispiel von Fig. 2 wird hier jedoch das Prägeelement 16 auf die Kaschierplatte 10 aufgesetzt und dort aufgelötet oder aufgeschweißt. Abermals entsteht eine über die Oberfläche der Kaschierplatte 10 erhabene Prägestruktur 14, so daß damit hergestellte Datenträger eine entsprechend der Prägestruktur 14 komplementäre Oberflächenstruktur derart erhalten, so daß diese bündig mit der Oberfläche des Datenträgers abschließt.

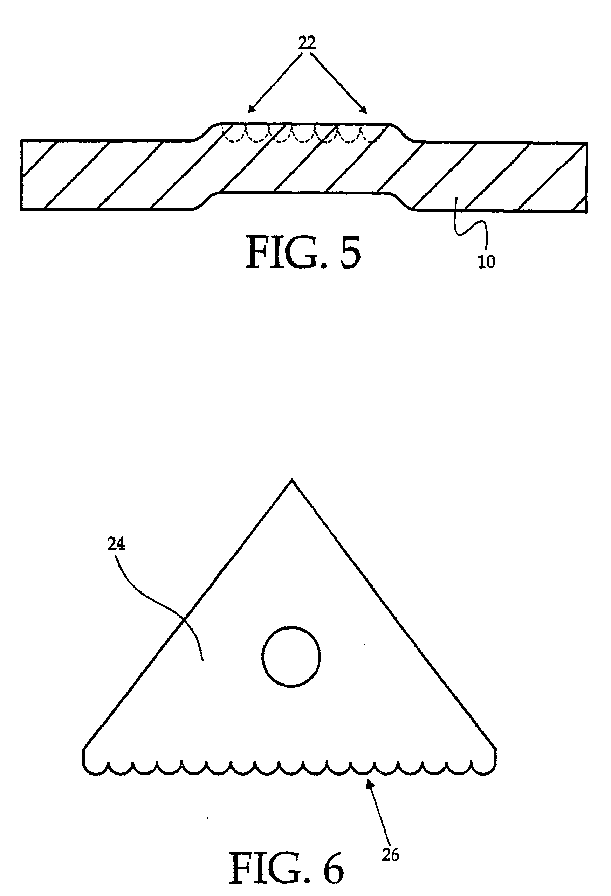

Fig. 4 zeigt in einer Schnittansicht eine dritte Ausführungsform einer Kaschierplatte 10. Auf die Oberfläche der Kaschierplatte 10 ist eine Schicht 20, insbesondere eine Lotschicht, aufgebracht. Diese Schicht 20 ist erhaben über der Oberfläche der Kaschierplatte 10 ausgebildet. In einem nachfolgenden Schritt wird in diese erhabene Schicht 20 die gewünschte Prägestruktur eingefräst. Eine derartige Struktur ist mittels strichlierter Linien angedeutet. Abermals entsteht auf diese Weise eine Prägestruktur, die sich über die Oberfläche der Kaschierplatte 10 erhebt. Mit dieser Kaschierplatte 10 hergestellte Datenträger haben somit wiederum eine Oberflächenstruktur, die entsprechend und komplementär zur Prägestruktur 14 ist. Im Unterschied zu den Ausführungsbeispielen von Fig. 2 und Fig. 3 wird hier jedoch nicht vorab ein Prägeelement 16 hergestellt, sondern die gewünschte Prägestruktur 14 auf eine zusätzliche Schicht auf der Kaschierplatte 10 eingebracht.

Fig. 5 zeigt in einer Schnittansicht eine vierte Ausführungsform einer Kaschierplatte 10. Mit beispielsweise einem Tiefziehvorgang wird ein erhabener Abschnitt erzeugt und anschließend, wie mit strichlierten Linien angedeutet, eine gewünschte Prägestruktur eingefräst. Im Gegensatz zu den Ausführungsbeispielen von Fig. 2, 3 und 4 ist hier die Prägestruktur direkt auf und einstückig mit der Kaschierplatte 10 ausgebildet. Gleichzeitig ist die Prägestruktur, wie schon in den Ausführungsbeispielen zuvor, erhaben auf der Oberfläche der Kaschierplatte 10 ausgebildet.

Die in den Figuren 2 und 3 beispielhaft dargestellten Ausführungsformen erzeugen auf dem Datenträger eine Oberflächenstruktur, deren oberstes Niveau unterhalb des Niveaus der umgebenden Datenträgeroberfläche liegt. Die Ausführungsformen von Fig. 4 und 5 erzeugen eine Struktur auf dem Datenträger, die bündig mit der umgebenden Datenträgeroberfläche abschließt.

Bei üblichen Herstellungsverfahren von Datenträgern mittels Kaschierplatten werden gleichzeitig mehrere Schichten von Kaschierplatten mit zwischenliegenden zu erzeugenden Datenträgern aufeinandergestapelt und zusammengepreßt. Daher sind bevorzugt Mittel vorgesehen, die die gegenüber dem erhabenen Abschnitt 22 entstehende Einbuchtung ausgleichen. Beispielsweise kann diese Einbuchtung mit einem geeigneten Werkstoff verfüllt werden.

Fig. 6 zeigt eine Seitenansicht eines Werkzeugs zum Herstellen von Prägestrukturen auf Kaschierplatten. Dieses Werkzeug ist eine Hartmetallwendeplatte 24 mit einer Schneidengeometrie 26, die dem Querschnittsprofil der auf dem Datenträger zu erzeugenden Oberflächenstruktur entspricht.

Beim Ausbilden der Prägestruktur 14 auf das Prägeelement 16 der Ausführungsbeispiele in Fig. 2 und 3 oder auf der erhabenen Schicht 20 im Ausführungsbeispiel von Fig. 4 oder auf dem erhabenen Abschnitt 22 im Ausführungsbeispiel von Fig. 5 wird in besonders bevorzugter Weise eine derartige mehrschneidige Wendeplatte verwendet.

Die erhabene Prägestruktur einer Kaschierplatte kann mit Hilfe eines Kreissägeblattes als Werkzeug ausgebildet werden. Die Schneidezähne des Kreissägeblattes sind dazu entsprechend der gewünschten zu erzeugenden Linsenstruktur geformt.

## Patentansprüche

1. Vorrichtung zur Herstellung eines Datenträgers mit einer zumindest bereichsweise vorgesehenen Oberflächenstruktur, wobei die Vorrichtung wenigstens zwei Kaschierplatten (10) aufweist zwischen welchen Datenträgerschichten unter Wärme- und Druckeinwirkung laminiert werden, **dadurch gekennzeichnet, daß** zumindest eine Kaschierplatte (10) zumindest in Teilbereichen eine entsprechende Prägestruktur (14) aufweist, welche derart erhaben auf der Kaschierplatte (10) ausgebildet ist, daß die auf dem Datenträger zu erzeugende Oberflächenstruktur nicht über das umgebende Oberflächenniveau hinausragt.

2. Vorrichtung nach Anspruch 1, **dadurch gekennzeichnet, daß** die Prägestruktur (14) fest mit der Kaschierplatte (10) verbunden ist.

3. Vorrichtung nach Anspruch 1 oder 2, **dadurch gekennzeichnet, daß** die Prägestruktur (14) einstückig mit der Kaschierplatte (10) ausgebildet ist.

4. Vorrichtung nach wenigstens einem der Ansprüche 1 bis 3, **dadurch gekennzeichnet, daß** die Prägestruktur (14) eine Zylinder-Linsen- oder Kugel-Linsen-Prägestruktur oder eine Kombination aus Zylinder-Linsen- und Kugel-Linsen-Prägestrukturen aufweist.

5. Vorrichtung nach wenigstens einem der Ansprüche 1, 2 oder 4, **dadurch gekennzeichnet, daß** die Prägestruktur (14) auf einem Prägeelement (16), insbesondere einem Prägeeinsatz, ausgebildet ist, das bzw. der in eine Ausnehmung (18) der Kaschierplatte (10) eingesetzt ist.

6. Vorrichtung nach wenigstens einem der Ansprüche 1, 2 oder 4, **dadurch gekennzeichnet, daß** die Prägestruktur (14) auf einem Prägeelement (16) ausgebildet ist, das auf die Kaschierplatte (10) aufgesetzt und fest mit dieser verbunden ist.

7. Vorrichtung nach Anspruch 6, **dadurch gekennzeichnet, daß** das Prägeelement (16) auf die Kaschierplatte (10) aufgelötet oder aufgeschweißt ist.

8. Vorrichtung nach wenigstens einem der Ansprüche 1 bis 4, **dadurch gekennzeichnet, daß** die Prägestruktur (14) in eine auf die Kaschierplatte (10) aufgebrachte Lotschicht (20) eingefräst ist.

9. Vorrichtung nach wenigstens einem der Ansprüche 1 bis 4, **dadurch gekennzeichnet, daß** die Prägestruktur (14) in einen vorbestimmten Abschnitt der Kaschierplatte (10) eingefräst ist, der zuvor derart tiefgezogen oder verformt wurde, daß er einen erhabenen Abschnitt (22) der Kaschierplatte (10) bildet.

10. Verfahren zur Herstellung einer Kaschierplatte für die Herstellung eines Datenträgers mit einer Oberflächenstruktur, wobei die Kaschierplatte eine dementsprechend komplementäre Prägestruktur aufweist, **dadurch gekennzeichnet, daß** das Aufbringen der Prägestruktur auf der Kaschierplatte derart erfolgt, daß die Prägestruktur mittels eines Werkzeuges (24) erhaben auf der Kaschierplatte ausgebildet wird, wobei das Werkzeug (24) eine Wendeplatte mit einer Schneidengeometrie (26) in Form des Querschnittsprofils der Prägestruktur oder ein Kreissägeblatt ist, dessen Schneidezähne entsprechend einer gewünschten zu erzeugenden Linsenstruktur geformt sind.

11. Verfahren nach Anspruch 10, **dadurch gekennzeichnet, daß** die Prägestruktur fest mit der Kaschierplatte verbunden wird.

12. Verfahren nach Anspruch 10 oder 11, **dadurch gekennzeichnet, daß** die Prägestruktur als Zylinder-Linsen-Prägestruktur ausgebildet wird.

13. Verfahren nach wenigstens einem der Ansprüche 10 bis 12, **dadurch gekennzeichnet, daß** die Prägestruktur direkt auf der Kaschierplatte und einstückig mit dieser ausgebildet wird.

14. Verfahren nach wenigstens einem der Ansprüche 10 bis 12, **dadurch gekennzeichnet, daß** die Prägestruktur auf einem Prägeeinsatz ausgebildet wird, der in eine Ausfräsung in der Kaschierplatte eingesetzt und dort befestigt wird.

15. Verfahren nach wenigstens einem der Ansprüche 10 bis 12, **dadurch gekennzeichnet, daß** ein die Prägestruktur aufweisendes Prägeelement auf die Kaschierplatte aufgeschweißt oder aufgelötet wird.

16. Verfahren nach wenigstens einem der Ansprüche 10 bis 13, **dadurch gekennzeichnet, daß** die Ausbildung der Prägestruktur durch folgende Schritte erfolgt,
a) Tiefziehen der Kaschierplatte an einer vorbestimmten Stelle, so daß ein erhabener Abschnitt der Kaschierplatte gebildet wird, und
b) Einfräsen der Prägestruktur in den erhabenen Abschnitt.

17. Verfahren nach Anspruch 16, **dadurch gekennzeichnet, daß** Schritt a) mittels eines Tiefziehstempels erfolgt.

18. Verfahren nach wenigstens einem der Ansprüche 10 bis 13, **dadurch gekennzeichnet, daß** die Ausbildung der Prägestruktur durch folgende Schritte erfolgt,
a) Auftragen einer Schicht, insbesondere einer Lotschicht, auf die Kaschierplatte und
b) Einfräsen der Prägestruktur in die erhabene Schicht.

19. Verfahren nach Anspruch 18, **dadurch gekennzeichnet, daß** die Schicht 0,1 mm bis 0,5 mm, vorzugsweise 0,1 mm erhaben ist.

20. Kaschierplatte mit einer Prägestruktur, wobei die Kaschierplatte mit einem Verfahren gemäß wenigstens einem der Ansprüche 10 bis 19 herstellbar ist.

## Claims

1. An apparatus for producing a data carrier with a surface structure provided at least in certain areas, the apparatus having at least two laminating plates (10) between which data carrier layers are laminated under the action of heat and pressure, **characterized in that** at least one laminating plate (10) has at least in partial areas a corresponding embossed structure (14) that is formed on the laminating plate (10) in raised fashion such that the surface structure to be produced on the data carrier does not protrude beyond the surrounding surface level.

2. An apparatus according to claim 1, **characterized in that** the embossed structure (14) is firmly connected with the laminating plate (10).

3. An apparatus according to claim 1 or 2, **characterized in that** the embossed structure (14) is formed integrally with the laminating plate (10).

4. An apparatus according to at least one of claims 1 to 3, **characterized in that** the embossed structure (14) has a cylindrical-lens or spherical-lens embossed structure or a combination of cylindrical-lens and spherical-lens embossed structures.

5. An apparatus according to at least one of claims 1, 2 or 4, **characterized in that** the embossed structure (14) is formed on an embossed element (16), in particular an embossed insert, which is inserted into a recess (18) of the laminating plate (10).

6. An apparatus according to at least one of claims 1, 2 or 4, **characterized in that** the embossed structure (14) is formed on an embossed element (16) that is placed on the laminating plate (10) and firmly connected therewith.

7. An apparatus according to claim 6, **characterized in that** the embossed element (16) is soldered or welded onto the laminating plate (10).

8. An apparatus according to at least one of claims 1 to 4, **characterized in that** the embossed structure (14) is milled into a solder layer (20) applied to the laminating plate (10).

9. An apparatus according to at least one of claims 1 to 4, **characterized in that** the embossed structure (14) is milled into a predetermined portion of the laminating plate (10) that was previously deep-drawn or deformed so as to form a raised portion (22) of the laminating plate (10).

10. A method for producing a laminating plate for producing a data carrier with a surface structure, the laminating plate having an accordingly complementary embossed structure, **characterized in that** the embossed structure is applied to the laminating plate in such a way that the embossed structure is formed in raised fashion on the laminating plate by means of a tool (24), the tool (24) being a turning plate with a cutting-edge geometry (26) in the form of the cross-sectional profile of the embossed structure, or a circular saw sheet whose cutting teeth are shaped in accordance with a desired lens structure to be produced.

11. A method according to claim 10, **characterized in that** the embossed structure is connected firmly with the laminating plate.

12. A method according to claim 10 or 11, **characterized in that** the embossed structure is formed as a cylindrical-lens embossed structure.

13. A method according to at least one of claims 10 to 12, **characterized in that** the embossed structure is formed directly on the laminating plate and integrally therewith.

14. A method according to at least one of claims 10 to 12, **characterized in that** the embossed structure is formed on an embossed insert that is inserted into a milled slot in the laminating plate and fastened there.

15. A method according to at least one of claims 10 to 12, **characterized in that** an embossed element having the embossed structure is welded or soldered onto the laminating plate.

16. A method according to at least one of claims 10 to 13, **characterized in that** the embossed structure is formed by the following steps,
a) deep drawing the laminating plate at a predetermined place so as to form a raised portion of the laminating plate, and
b) milling the embossed structure into the raised portion.

17. A method according to claim 16, **characterized in that** step a) is effected by means of a deep-draw die.

18. A method according to at least one of claims 10 to 13, **characterized in that** the embossed structure is formed by the following steps,
a) applying a layer, in particular a solder layer, to the laminating plate, and
b) milling the embossed structure into the raised layer.

19. A method according to claim 18, **characterized in that** the layer is raised 0.1 millimeters to 0.5 millimeters, preferably 0.1 millimeters.

20. A laminating plate with an embossed structure, the laminating plate being producible with a method according to at least one of claims 10 to 19.

## Revendications

1. Dispositif pour la fabrication d'un support de données ayant une structure de surface prévue au moins par endroits, le dispositif présentant au moins deux plaques de stratification (10) entre lesquelles des couches de support de données sont stratifiées sous l'action de la chaleur et de la pression, **caractérisé en ce qu'**au moins une plaque de stratification (10) présente, au moins dans des zones partielles, une structure estampée correspondante (14), laquelle est réalisée en relief sur la plaque de stratification (10) de telle sorte que la structure de surface à produire sur le support de données ne dépasse pas le niveau de la surface environnante.

2. Dispositif selon la revendication 1, **caractérisé en ce que** la structure estampée (14) est solidement reliée à la plaque de stratification (10).

3. Dispositif selon la revendication 1 ou 2, **caractérisé en ce que** la structure estampée (14) est réalisée d'un seul tenant avec la plaque de stratification (10).

4. Dispositif selon l'une au moins des revendications 1 à 3, **caractérisé en ce que** la structure estampée (14) présente une structure estampée de lentille cylindrique ou de lentille sphérique ou bien une combinaison de structures estampées de lentille cylindrique et de lentille sphérique.

5. Dispositif selon l'une au moins des revendications 1, 2 ou 4, **caractérisé en ce que** la structure estampée (14) est réalisée sur un élément d'estampage (16), en particulier un insert d'estampage, qui est placé dans un creux (18) de la plaque de stratification (10).

6. Dispositif selon l'une au moins des revendications 1, 2 ou 4, **caractérisé en ce que** la structure estampée (14) est réalisée sur un élément d'estampage (16) qui est posé sur la plaque de stratification (10) et solidement relié à celle-ci.

7. Dispositif selon la revendication 6, **caractérisé en ce que** l'élément d'estampage (16) est brasé ou soudé sur la plaque de stratification (10).

8. Dispositif selon l'une au moins des revendications 1 à 4, **caractérisé en ce que** la structure estampée (14) est fraisée dans une couche de brasage (20) appliquée sur la plaque de stratification (10).

9. Dispositif selon l'une au moins des revendications 1 à 4, **caractérisé en ce que** la structure estampée (14) est fraisée dans un secteur prédéterminé de la plaque de stratification (10) qui a été préalablement emboutie ou déformée de telle sorte qu'elle forme une zone en relief (22) de la plaque de stratification (10).

10. Procédé de fabrication d'une plaque de stratification pour la fabrication d'un support de données avec une structure de surface, la plaque de stratification présentant une structure estampée complémentaire appropriée, **caractérisé en ce que** l'application de la structure estampée sur la plaque de stratification a lieu de telle sorte que la structure estampée est réalisée en relief sur la plaque de stratification au moyen d'un outil (24), l'outil (24) étant une plaque réversible à géométrie tranchante (26) ayant la forme du profil de coupe transversale de la structure estampée, ou étant une lame de scie circulaire dont les dents sont formées conformément à une structure lenticulaire souhaitée à produire.

11. Procédé selon la revendication 10, **caractérisé en ce que** la structure estampée est reliée solidement à la plaque de stratification.

12. Procédé selon la revendication 10 ou 11, **caractérisé en ce que** la structure estampée est réalisée en tant que structure estampée de lentille cylindrique.

13. Procédé selon l'une au moins des revendications 10 à 12, **caractérisé en ce que** la structure estampée est réalisée directement sur la plaque de stratification et d'un seul tenant avec celle-ci.

14. Procédé selon l'une au moins des revendications 10 à 12, **caractérisé en ce que** la structure estampée est réalisée sur un insert d'estampage qui est placé dans une fraisure dans la plaque de stratification et qui y est fixé.

15. Procédé selon l'une au moins des revendications 10 à 12, **caractérisé en ce qu'**un élément d'estampage présentant la structure estampée est soudé ou brasé sur la plaque de stratification.

16. Procédé selon l'une au moins des revendications 10 à 13, **caractérisé en ce que** la réalisation de la structure estampée a lieu selon les étapes suivantes :
(a) emboutissage de la plaque de stratification à un endroit prédéterminé, de sorte qu'un secteur en relief de la plaque de stratification est formé, et
(b) fraisage de la structure estampée dans le secteur en relief.

17. Procédé selon la revendication 16, **caractérisé en ce que** l'étape a) a lieu au moyen d'un tampon d'emboutissage.

18. Procédé selon l'une au moins des revendications 10 à 13, **caractérisé en ce que** la réalisation de la structure estampée a lieu selon les étapes suivantes :
(a) application d'une couche, en particulier une couche de brasage, sur la plaque de stratification et
(b) fraisage de la structure estampée dans la couche en relief.

19. Procédé selon la revendication 18, **caractérisé en ce que** la couche est saillante de 0,1 à 0,5 mm, de préférence de 0,1 mm.

20. Plaque de stratification avec une structure estampée, la plaque de stratification pouvant être fabriquée suivant un procédé selon l'une au moins des revendications 10 à 19.
